# EUROPÄISCHE PATENTANMELDUNG

(11) **EP 1 837 113 A1**
(43) Veröffentlichungstag der Anmeldung: **26.09.2007**
(21) Anmeldenummer: 06006139.7
(22) Anmeldetag: 24.03.2006
(51) Int. Cl.: B23H 1/06, B23H 9/10, B23H 9/14

(54) **Elektrodenanordnung und Verfahren zur funkenerosiven Bearbeitung eines elektrisch nichtleitenden Materials**

(71) Anmelder: SIEMENS AKTIENGESELLSCHAFT, 80333 München (DE); Albert-Ludwigs-Universität Freiburg, 79085 Freiburg (DE)
(72) Erfinder: Förster, Ralf Dr, 12623Berlin (DE); Klein, Karsten Dr., 14089 Berlin (DE); Laudien, Ulrich, 10555 Berlin (DE); Settegast, Silke, 10439 Berlin (DE); Subramanian, Ramesh Dr, 10777 Berlin (DE)

(57) **Zusammenfassung**

Elektrodenanordnung (3) für die funkenerosive Bearbeitung eines elektrisch nichtleitenden Materials (1), die einen ersten Bestandteil (3a) zum Abtragen des elektrisch nichtleitenden Materials (1) und einen zweiten Bestandteil (3b) zum Abscheiden einer elektrisch leitenden Substanz (7) auf dem elektrisch nichtleitenden Material (1) aufweist.

## Beschreibung

Die Erfindung betrifft eine Elektrodenanordnung für die funkenerosive Bearbeitung eines elektrisch nichtleitenden Materials und ein Verfahren zur funkenerosiven Bearbeitung eines elektrisch nichtleitenden Materials unter Verwendung der Elektrodenanordnung.

Funkenerosive Bearbeitungsverfahren für elektrisch nichtleitende Materialien sind im Stand der Technik bekannt. Sie werden u. a. eingesetzt, um in Bauteilen, die mit einer keramischen Beschichtung versehen sind, Bohrungen zu erstellen. So werden etwa bei Turbinenschaufeln, die eine keramische Wärmedämmschicht auf einem metallischen Grundkörper aufweisen, Kühlluftbohrungen durch Funkenerosion erstellt.

In der DE 41 02 250 A1 ist allgemein ein Verfahren zur funkenerosiven Bearbeitung elektrisch nichtleitender Materialien beschrieben. Bei diesem Verfahren wird das nichtleitende Material vor seiner Bearbeitung mit einer elektrisch leitenden Substanz beschichtet. Diese Schicht wird als Assistenzelektrode verwendet, die bei der funkenerosiven Bearbeitung eine elektrische Kontaktierung zu einer Arbeitselektrode herstellt. Das mit der Assistenzelektrode beschichtete, elektrisch nichtleitende Material und zumindest der zur Assistenzelektrode weisende Endbereich der Arbeitselektrode, an dem es bei der Bearbeitung zur Funkenentladung kommt, sind in ein Dielektrikum getaucht, das durch eine Flüssigkeit wie Kerosin oder auch ein Gas gebildet wird.

Wenn an die Anordnung eine Spannung angelegt wird, kommt es zwischen der Arbeitselektrode und der Assistenzelektrode zu einer Funkenentladung und in der Folge zu einem Abtrag der Assistenzelektrode sowie des darunterliegenden elektrisch nichtleitenden Materials. Gleichzeitig wird ein Teil des Dielektrikums gecrackt, wodurch Kohlenstoff oder leitfähige Carbide entstehen, die in Form einer elektrisch leitfähigen Schicht auf den freigelegten Oberflächenbereichen des nichtleitenden Materials abgeschieden werden. Die so abgeschiedene, elektrisch leitende Schicht ersetzt somit das abgetragene Material der Assistenzelektrode und stellt bei einem Vordringen der Arbeitselektrode in das nichtleitende Material eine leitende Verbindung zu der Oberfläche des nichtleitenden Materials her, so dass eine kontinuierliche Bearbeitung möglich ist.

Als nachteilig wird angesehen, dass bei dem bekannten Verfahren die Bearbeitungsgeschwindigkeit begrenzt ist, da der Abscheidungsprozess der leitenden Schicht langsam erfolgt. Eine zügige Bearbeitung ist deshalb nicht möglich. Außerdem kann es auf Grund der im µm-Bereich liegenden geringen Dicke der neu gebildeten Schicht leicht zu Unterbrechungen der Leitungen kommen, wenn diese beschädigt wird, was den Prozess vollständig zum Erliegen bringt.

Aufgabe der vorliegenden Erfindung ist es, eine Elektrodenanordnung bereitzustellen, die eine schnelle und verlässliche Ausbildung der zusätzlichen leitenden Schicht aus einer elektrisch leitenden Substanz auf dem elektrisch nichtleitenden Material und gleichzeitig einen zügigen Abtrag des elektrisch nichtleitenden Materials ermöglicht.

Die Aufgabe wird erfindungsgemäß durch eine Elektrodenanordnung mit einem ersten Bestandteil zum Abtragen des elektrisch nichtleitenden Materials und einem zweiten Bestandteil zum Abscheiden einer elektrisch leitenden Substanz auf dem elektrisch nichtleitenden Material gelöst. Das grundlegende Prinzip ist also, dass jeweils ein Bestandteil der Elektrodenanordnung für jeweils eine Aufgabe, entweder das Abtragen oder das Abscheiden optimiert ist.

Ein besonderer Vorteil der erfindungsgemäßen Elektrodenanordnung ist, dass die Ausbildung der zusätzlichen leitenden Schicht, die aus der elektrisch leitenden Substanz besteht, schnell und zuverlässig erfolgt. Dadurch steigt die mögliche Bearbeitungsgeschwindigkeit im Vergleich zu den im Stand der Technik beschriebenen Verfahren erheblich. Weil die Abscheidung der elektrisch leitenden Substanz unter optimierten Bedingungen erfolgt, weist die zusätzlich elektrisch leitende Schicht eine höhere Stabilität auf. So wird die Gefahr verringert, dass es durch eine Beschädigung der Schicht zu einer Unterbrechung des Stromkreises und damit zum Erliegen des Verfahrens kommt.

In einer Ausführung der Erfindung sind der erste und der zweite Bestandteil zwei chemisch und/oder physikalisch unterschiedliche Verbindungen. Sie können also beispielsweise unterschiedliche Metalle oder Metalllegierungen sein. Außerdem können sie sich, wenn sie aus chemisch identischen Stoffen bestehen, beispielsweise in ihren Oberflächeneigenschaften unterscheiden. Vorteilhaft kann hier sein, dass beispielsweise der Bestandteil zum Abtragen des nichtleitenden Materials besonders widerstandsfähig und hitzeresistent ist und deshalb während der funkenerosiven Bearbeitung weitestgehend unbeschädigt bleibt und der Bestandteil zum Abscheiden einer elektrisch leitenden Substanz entweder die Bildung von Kohlenstoff aus dem Dielektrikum begünstigt oder selbst Bestandteil der elektrisch leitenden Substanz wird.

Die Elektrodenanordnung kann auch derart ausgeführt sein, dass jeweils ein Bestandteil auf Teilen des anderen Bestandteils als Beschichtung aufgebracht ist. Auf diese Weise erhält man zwei räumlich begrenzte Bereiche innerhalb der Elektrodenanordnung, die jeweils für die Abscheidung und für die Abtragung optimiert sind.

Versuche haben außerdem gezeigt, dass eine Elektrodenanordnung, die aus einer diskreten Erodierelektrode zum Abtragen des elektrisch nichtleitenden Materials und einer diskreten Abscheidungselektrode zum Abscheiden der elektrisch leitenden Substanz besteht eine besonders schnelle und sichere funkenerosive Bearbeitung des elektrisch nichtleitenden Materials erlaubt. In diesem Fall sind zwei diskrete Elektroden vorhanden, die elektrisch leitend miteinander verbunden sein können, aber nicht müssen. Durch die räumliche Trennung der beiden Elektroden kommt es zu keiner Störung des jeweils ablaufenden Prozesses.

Auch in diesem Fall ist es möglich, dass die Erodierelektrode und die Abscheidungselektrode aus zwei chemisch und/oder physikalisch unterschiedlichen Verbindungen, wie z.B. zwei Metallen oder Metalllegierungen, bestehen.

Außerdem können die Erodierelektrode und die Abscheidungselektrode unterschiedliche Geometrien aufweisen, die jeweils so gewählt werden können, dass sie die Funktion des Abscheidens bzw. des Erodierens unterstützen. Die Geometrie der Erodierelektrode kann auch mit Bezug auf die gewünschte Form der funkenerosiven Bearbeitung gewählt werden.

Da die Abscheidung der elektrisch leitenden Substanz besonders auf den Seitenwänden des funkenerosiven Bearbeitungsbereiches erfolgen soll, ist es günstig, wenn die Abscheidungselektrode die Erodierelektrode umgibt. So ist nämlich gewährleistet, dass die Abscheidungselektrode räumlich nah zu dem Teil des elektrisch nichtleitenden Materials angeordnet ist, auf dem die elektrisch leitende Substanz abgeschieden werden soll.

In einer weiteren Ausführungsform der Erfindung sind die Abscheidungselektrode und die Erodierelektrode fest miteinander verbunden. Dies kann beispielsweise dadurch verwirklicht werden, dass die Abscheidungselektrode teilweise als Beschichtung auf der Erodierelektrode oder die Erodierelektrode teilweise als Beschichtung auf der Abscheidungselektrode aufgebracht ist. Die Beschichtung kann z.B. aus TiN bestehen. Auf diese Weise erhält man eine Elektrodenanordnung, die einfach herzustellen ist und eine hohe inhärente Stabilität aufweist.

Es ist aber auch möglich, dass die Erodierelektrode und die Abscheidungselektrode unabhängig voneinander beweglich sind. Dadurch kann gewährleistet werden, dass die jeweilige Bewegung der Elektroden an die Geschwindigkeit des Prozesses, den sie ausführen, angepasst werden kann. Das bedeutet, dass sowohl die Abscheidungselektrode in einer Art bewegt werden kann, die optimal für ihre Funktion des Abscheidens der elektrisch leitenden Substanz ist als auch die Erodierelektrode so bewegt werden kann, dass sie in optimaler Weise das Abtragen des elektrisch nichtleitenden Materials ermöglicht. Dazu können die Erodierelektrode und/oder die Abscheidungselektrode sowohl eine translatorische als auch eine rotatorische Bewegung oder auch eine Kombination beider Bewegungsformen ausführen.

Von Vorteil kann sein, wenn die Elektrodenanordnung eine Steuereinheit aufweist, die die Bewegung der Elektroden insbesondere in der Weise steuert, dass die Erodierelektrode und die Abscheidungselektrode mit unterschiedlichen Vorschüben auf das elektrisch nichtleitende Material zubewegt werden. Auf diese Weise kann berücksichtigt werden, dass die Prozesse des Erodierens und des Abscheidens mit unterschiedlichen Geschwindigkeiten ablaufen können.

Es wird auch ein Verfahren zur funkenerosiven Bearbeitung eines elektrisch nichtleitenden Materials bereitgestellt, bei dem eine der zuvor beschriebenen Elektrodenanordnungen verwendet wird.

Das Verfahren eignet sich in besonderem Maße für elektrisch nichtleitende Materialien, die als eine Beschichtung auf einem Bauteil aufgebracht sind. Diese Beschichtung kann beispielsweise eine Wärmedämmschicht sein, die wiederum aus voll- oder teilstabilisiertem Zirkoniumoxid bestehen oder es enthalten kann. Entsprechende Beschichtungen finden sich auf vielen Bauteilen, wobei es häufig nötig ist, diese Beschichtungen zu durchbohren, was mit Hilfe des erfindungsgemäßen Verfahrens schnell und effizient gelingt.

Versuche haben gezeigt, dass das erfindungsgemäße Verfahren besonders gut für die funkenerosive Bearbeitung von Bauteilen, die zu einer Turbine gehören, geeignet ist. Da diese heutzutage meist mit keramischen Wärmedämmschichten versehen sind, ist das erfindungsgemäße Verfahren für das Erstellen von Kühlluftbohrungen geeignet, wobei es hier gelingt, die Öffnungsbereiche in Form von Diffusoren direkt während der funkenerosiven Bearbeitung auszubilden. Dies gilt besonders für Lauf- oder Leitschaufeln von Turbinen.

Die erfindungsgemäße Elektrodenanordnung und das erfindungsgemäße Verfahren werden im Folgenden anhand von zwei Zeichnungen näher erläutert. Es zeigen:
- Figur 1: eine Elektrodenanordnung zur funkenerosiven Bearbeitung von elektrisch nicht leitenden Materialien gemäß der vorliegenden Erfindung in schematischer Darstellung vor dem Beginn der Bearbeitung,
- Figur 2: die Anordnung aus Figur 1 während der Bearbeitung,
- Figur 3: eine Gasturbine,
- Figur 4: eine Turbinenschaufel und
- Figur 5: eine Brennkammer.

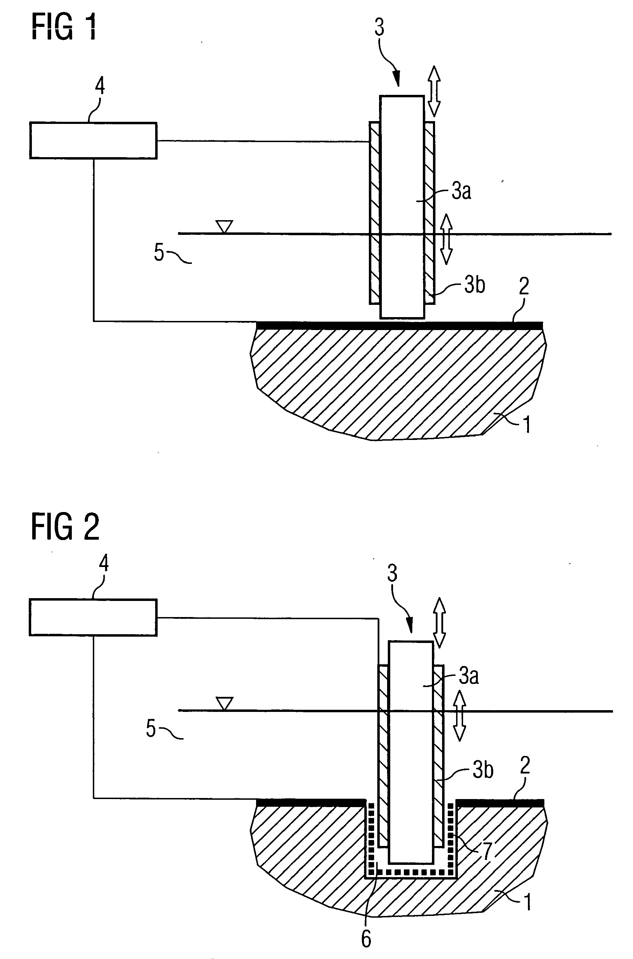

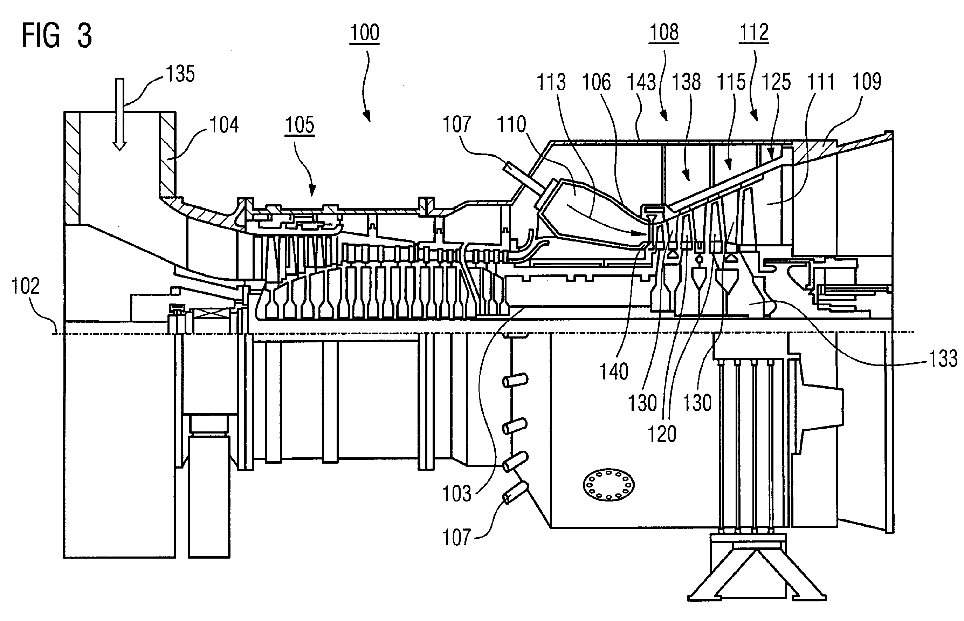

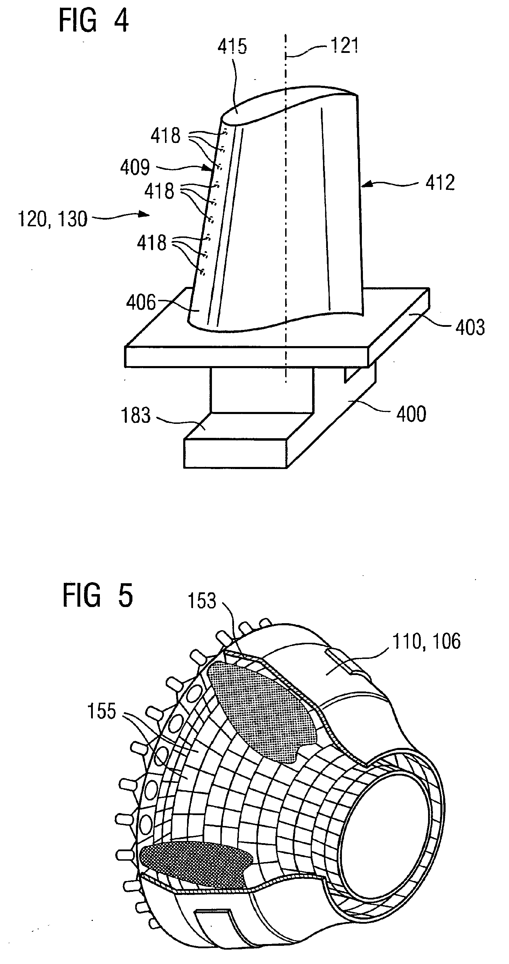

Figur 1 zeigt eine schematische Darstellung einer erfindungsgemäßen Elektrodenanordnung, wobei die Elektrodenanordnung vor der Bearbeitung eines elektrisch nichtleitenden Materials dargestellt ist. In der dargestellten Ausführungsform soll ein Bauteil 1, das aus einer elektrisch nichtleitenden Keramik besteht, bearbeitet werden. Es kann sich dabei um ein Teil einer Turbine, wie z.B. eine Lauf- 120 (Fig. 3, 4) oder Leitschaufel 130 (Fig. 3, 4) handeln. Das elektrisch nichtleitende Material kann auch eine Beschichtung, beispielsweise in der Form einer Wärmedämmschicht sein, wobei sie aus voll- oder teilstabilisiertem Zirkoniumoxid bestehen kann.

Eine Assistenzelektrode 2 ist flächig als Schicht aus Graphit auf der Oberfläche des Bauteils 1 aufgebracht. Verschiedene im Stand der Technik bekannte Verfahren sind für die Auftragung geeignet und sie kann auch aus verschiedenen Metallen oder elektrisch leitenden Polymeren bestehen. Die Assistenzelektrode 2 ist ebenso wie eine Elektrodenanordnung 3 elektrisch leitend mit einem Generator 4 verbunden, so dass an beiden Elektroden 2, 3 eine geeignete Spannung anliegt.

Die Elektrodenanordnung 3 besteht in diesem Fall aus einer diskreten Erodierelektrode 3a und einer diskreten Abscheidungselektrode 3b, die elektrisch leitend miteinander verbunden sind. Beide Elektroden 3a, 3b können aus chemisch und/oder physikalisch unterschiedlichen Verbindungen, wie beispielsweise zwei unterschiedlichen Metallen bestehen. Hier weisen sie außerdem unterschiedliche Geometrien auf und die Abscheidungselektrode 3b umgibt zumindest teilweise die Erodierelektrode 3a. Die Erodierelektrode 3a und die Abscheidungselektrode 3b können fest miteinander verbunden sein, was beispielsweise dadurch realisiert werden kann, dass die Abscheidungselektrode 3b in Form einer Beschichtung auf der Seitenwand der Erodierelektrode 3a aufgebracht ist.

Andererseits ist es auch möglich, dass die beiden Elektroden 3a, 3b separate Bauteile und unabhängig voneinander beweglich sind, so dass sie beide jeweils eine translatorische und/oder eine rotatorische Bewegung ausführen können. Wenn in der Elektrodenanordnung 3 zusätzlich eine nicht gezeigte Steuereinheit vorhanden ist, kann die Bewegung der Elektroden 3a, 3b gesteuert werden, wobei es insbesondere möglich ist, dass die beiden Elektroden 3a, 3b mit unterschiedlichen Vorschüben in Richtung des Bauteils 1 bewegt werden.

Ein Dielektrikum 5 umgibt das Bauteil 1, die Assistenzelektrode 2 und den unteren Abschnitt der Elektrodenanordnung 3. Das Dielektrikum 5 kann beispielsweise Kerosin sein, es sind aber auch viele weitere im Stand der Technik bekannte Verbindungen geeignet.

Um das Bauteil 1 mit Hilfe des erfindungsgemäßen Verfahrens funkenerosiv zu bearbeiten, wird zunächst auf dessen Oberfläche eine elektrisch leitende Schicht insbesondere aus Graphit als Assistenzelektrode aufgebracht. Die Assistenzelektrode 2 und die Elektrodenanordnung 3 werden an den Generator 4 angeschlossen. Das Bauteil 1 und zumindest der untere Teil der Elektrodenanordnung 3, an dem die funkenerosive Bearbeitung stattfindet, werden mit dem Dielektrikum 5 umgeben.

Die Erodierelektrode 3a der Elektrodenanordnung 3 wird - wie Figur 2 zeigt - in unmittelbarer Nähe zur Assistenzelektrode 2 gebracht. Sobald an der Elektrodenanordnung 3 und der Assistenzelektrode 2 eine geeignete Spannung anliegt, kommt es zu einer elektrischen Kontaktierung in Form von Funkenschlag zwischen der Assistenzelektrode 2 und der Erodierelektrode 3a. Durch diese Funkenbildung werden ein Teil der Assistenzelektrode 2 und das keramische Material eines Bauteils 1 verdampft und abgetragen, um eine Öffnung 8 auszubilden. Bei jeder Funkenentladung werden außerdem Teile des Dielektrikum gecrackt, so dass Kohlenstoff und/oder Carbidverbindungen entstehen, die auf dem freigelegten elektrisch nichtleitenden Material des Bauteils 1 von der Abscheidungselektrode 3b abgeschieden werden und so eine leitende Schicht 7 auszubilden, welche das abgetragene Material der Assistenzelektrode 2 ersetzt, so dass es bei einer Fortsetzung des Verfahrens zu einem Funkenschlag zwischen der abgeschiedenen Schicht 7 und der Arbeitselektrode 3 kommt und in der Folge die Schicht 7 zusammen mit dem keramischen Material des Bauteils 1 weiter abgetragen werden. Dadurch, dass die abgetragenen Bereiche der Schicht 7 wieder durch die Crackprodukte aufgefüllt werden, kann das Verfahren kontinuierlich fortgesetzt werden.

Aufgrund der Tatsache, dass die Erodierelektrode 3a und die Abscheidungselektrode 3b separate Bauteile sind, die unabhängig voneinander axial bewegt und gegebenenfalls auch verdreht oder verschwenkt werden können, ist es möglich, den Abtragungsprozess durch entsprechende Steuerung der Erodierelektrode 3a und die Abscheidung von Crackprodukten über eine entsprechende Steuerung der Abscheidungselektrode 3b zu steuern und insbesondere die Prozesse auch durch eine geeignete Materialauswahl für die Elektroden 3a, 3b zu beeinflussen.

Die Figur 3 zeigt beispielhaft eine Gasturbine 100 in einem Längsteilschnitt.
Die Gasturbine 100 weist im Inneren einen um eine Rotationsachse 102 drehgelagerten Rotor 103 mit einer Welle 101 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.
Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.
An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.
Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden beispielsweise eisen-, nickel- oder kobaltbasierte Superlegierungen verwendet.
Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierungen Teil der Offenbarung.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

Die Figur 4 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.
Als Leitschaufel 130 kann die Schaufel 130 an ihrer Schaufelspitze 415 eine weitere Plattform aufweisen (nicht dargestellt) .

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierung Teil der Offenbarung.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt; diese Schriften sind bzgl. des Erstarrungsverfahrens Teil der Offenbarung.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.
Die Dichte liegt vorzugsweise bei 95% der theoretischen Dichte.
Auf der MCrAlX-Schicht (als Zwischenschicht oder als äußerste Schicht) bildet sich eine schützende Aluminiumoxidschicht (TGO = thermal grown oxide layer).

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf, die vorzugsweise mit dem erfindungsgemäßen Verfahren hergestellt werden.

Die Figur 5 zeigt eine Brennkammer 110 der Gasturbine 100. Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf, die vorzugsweise mit dem erfindungsgemäßen Verfahren hergestellt werden.

Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.
Diese Schutzschichten können ähnlich der Turbinenschaufeln sein, also bedeutet beispielsweise MCrAlX: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.

Auf der MCrAlX kann noch eine beispielsweise keramische Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Turbinenschaufeln 120, 130, Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in der Turbinenschaufel 120, 130 oder dem Hitzeschildelement 155 repariert. Danach erfolgt eine Wiederbeschichtung der Turbinenschaufeln 120, 130, Hitzeschildelemente 155 und ein erneuter Einsatz der Turbinenschaufeln 120, 130 oder der Hitzeschildelemente 155.

Auch hier kann das erfindungsgemäße Verfahren zum Wiederöffnen von Löchern verwendet werden.

## Patentansprüche

1. Elektrodenanordnung (3) für die funkenerosive Bearbeitung eines elektrisch nichtleitenden Materials (1),
**dadurch gekennzeichnet, dass**
sie einen ersten Bestandteil (3a) zum Abtragen des elektrisch nichtleitenden Materials (1) und einen zweiten Bestandteil (3b) zum Abscheiden einer elektrisch leitenden Substanz (7) auf dem elektrisch nichtleitenden Material (1) aufweist.

2. Elektrodenanordnung (3) nach Anspruch 1,
**dadurch gekennzeichnet, dass**
der erste und der zweite Bestandteil (3a, 3b) zwei chemisch und/oder physikalisch unterschiedliche Verbindungen sind.

3. Elektrodenanordnung (3) nach Anspruch 1,
**dadurch gekennzeichnet, dass**
der erste und der zweite Bestandteil (3a, 3b) zwei unterschiedliche Metalle sind.

4. Elektrodenanordnung (3) nach einem der Ansprüche 1 bis 3,
**dadurch gekennzeichnet, dass**
der erste Bestandteil (3a) als Beschichtung teilweise auf dem zweiten Bestandteil (3b) oder der zweite Bestandteil (3b) teilweise als Beschichtung auf dem ersten Bestandteil (3a) aufgebracht ist.

5. Elektrodenanordnung (3) für die funkenerosive Bearbeitung eines elektrisch nichtleitenden Materials (1),
**dadurch gekennzeichnet, dass**
sie eine Erodierelektrode (3a) zum Abtragen des elektrisch nichtleitenden Materials (1) und eine Abscheidungselektrode (3b) zum Abscheiden einer elektrisch leitenden Substanz (7) auf dem elektrisch nichtleitenden Material (1) aufweist.

6. Elektrodenanordnung (3) nach Anspruch 5,
**dadurch gekennzeichnet, dass**
die Erodierelektrode (3a)und die Abscheidungselektrode (3b) aus zwei chemisch und/oder physikalisch unterschiedlichen Verbindungen bestehen.

7. Elektrodenanordnung (3) nach Anspruch 5,
**dadurch gekennzeichnet, dass**
die Erodierelektrode (3a) und die Abscheidungselektrode (3b) aus zwei unterschiedlichen Metallen bestehen.

8. Elektrodenanordnung (3) nach einem der Ansprüche 5 bis 7,
**dadurch gekennzeichnet, dass**
die Erodierelektrode (3a) und die Abscheidungselektrode (3b) unterschiedliche Geometrien aufweisen.

9. Elektrodenanordnung (3) nach einem der Ansprüche 5 bis 8,
**dadurch gekennzeichnet, dass**
die Abscheidungselektrode (3b) die Erodierelektrode (3a) umgibt.

10. Elektrodenanordnung (3) nach einem der Ansprüche 5 bis 9,
**dadurch gekennzeichnet, dass**
die Erodierelektrode (3a) und die Abscheidungselektrode (3b) fest miteinander verbunden sind.

11. Elektrodenanordnung (3) nach Anspruch 10,
**dadurch gekennzeichnet, dass**
die Abscheidungselektrode (3b) als Beschichtung auf der Erodierelektrode (3a) oder die Erodierelektrode (3a) als Beschichtung auf der Abscheidungselektrode (3b) aufgebracht ist.

12. Elektrodenanordnung (3) nach einem der Ansprüche 5 bis 9,
**dadurch gekennzeichnet, dass**
die Erodierelektrode (3a) und die Abscheidungselektrode (3b) unabhängig voneinander beweglich sind.

13. Elektrodenanordnung (3) nach Anspruch 12,
**dadurch gekennzeichnet, dass**
die Erodierelektrode (3a) und/oder die Abscheidungselektrode (3b) eine translatorische und/oder eine rotatorische Bewegung ausführen können.

14. Elektrodenanordnung (3) nach einem der Ansprüche 12 oder 13,
**dadurch gekennzeichnet, dass**
sie eine Steuereinheit aufweist, welche die Bewegungen der Elektroden (3a, 3b) steuert und insbesondere in der Weise steuert, dass die Erodierelektrode (3a) und die Abscheidungselektrode (3b) mit unterschiedlichen Vorschüben bewegt werden.

15. Verfahren zur funkenerosiven Bearbeitung eines elektrisch nichtleitenden Materials (1),
**dadurch gekennzeichnet, dass**
eine Elektrodenanordnung (3) nach einem der Ansprüche 1 bis 15 verwendet wird.

16. Verfahren nach Anspruch 15,
**dadurch gekennzeichnet, dass**
das elektrisch nichtleitende Material (1) eine Beschichtung auf einem Bauteil ist.

17. Verfahren nach Anspruch 16,
**dadurch gekennzeichnet, dass**
die Beschichtung eine Wärmedämmschicht ist.

18. Verfahren nach Anspruch 17,
**dadurch gekennzeichnet, dass**
die Wärmedämmschicht voll- oder teilstabilisiertes Zirkoniumoxid enthält oder daraus besteht.

19. Verfahren nach einem der Ansprüche 16 bis 18,
**dadurch gekennzeichnet, dass**
das Bauteil Teil einer Turbine ist.

20. Verfahren nach Anspruch 19,
**dadurch gekennzeichnet, dass**
das Bauteil eine Lauf- oder Leitschaufel ist.
